# EUROPEAN PATENT APPLICATION

(11) **EP 3 154 294 A1**
(43) Date of publication of application: **12.04.2017**
(21) Application number: 14894150.3
(22) Date of filing: 21.10.2014
(51) Int. Cl.: H04W 48/00

(54) **PRIVATE NETWORK SELECTION METHOD AND DEVICE**

(30) Priority: 05.06.2014 CN 201410248239
(71) Applicant: ZTE Corporation, Shenzhen, Guangdong 518057 (CN)
(72) Inventor: LIANG, Shuang, Shenzhen Guangdong 518057 (CN); ZHU, Jinguo, Shenzhen Guangdong 518057 (CN); LU, Fei, Shenzhen Guangdong 518057 (CN)
(74) Representative: HGF Limited
(86) International application number: PCT/CN2014/089035
(87) International publication number: WO 2015/184722

(57) **Abstract**

Disclosed are a dedicate network selection method and device. Herein, the method includes: a mobility management entity (MME) of a dedicate network acquiring user subscription data of a terminal when receiving a location update request; the MME determining to select a dedicate network for the terminal according to the user subscription data; and the MME judging whether an SGW and a PGW currently being used by the terminal belong to the dedicate network; if the SGW and the PGW currently being used by the terminal do not belong to the dedicate network, then the MME selecting an SGW and/or PGW of the dedicate network for the terminal, and switching the SGW and/or the PGW being used by the terminal to the selected SGW and/or PGW.

## Description

### Technical Field

The present invention relates to the communication field, and in particular to a dedicate network selection method and device.

### Background

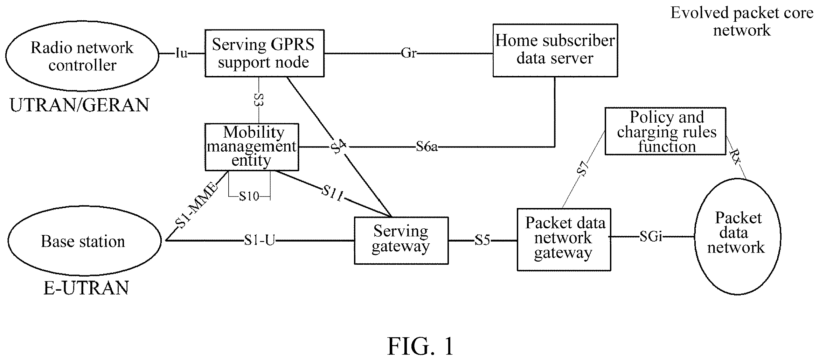

In order to maintain the competitiveness of the 3rd generation mobile communication system in the communication field, the working group for the 3rd Generation Partnership Project (3GPP) standard is committed to the research on the Evolved Packet System (EPS). The whole EPS system as shown in FIG. 1 mainly includes two parts, an Evolved Universal Terrestrial Radio Access Network (E-UTRAN) and an Evolved Packet Core (EPC). The EPC of that system can support the user to access from a GSM EDGE radio access network (GERAN) and a Universal Terrestrial Radio Access Network (UTRAN).

In the EPC packet core network, it includes a Home Subscriber Server (HSS), a Mobility Management Entity (MME), a Serving Gateway (S-GW), a packet data network (PDN) gateway (P-GW), a Serving GPRS Support Node (SGSN) and a Policy and Charging Enforcement Function (PCRF).

In the EPC packet core network, the HSS is a permanent storage site of the user subscription data, located in the user subscription home network. The MME is a storage site of the user subscription data in the current network, is responsible for signaling management from a terminal to a Non-Access Stratum (NAS) of the network, tracking and paging management function of the user in an idle mode, and bearer management. The S-GW is a gateway from the core network to the wireless system, is responsible for user plane bearer from the terminal to the core network, data cache of the terminal in the idle mode, a function of the network side sending a service request, lawful eavesdropping and packet data routing and forwarding function. The P-GW is a gateway of the evolved packet system (EPS) and an external network of the system, is responsible for functions, such as, the IP address allocation of the terminal, charging function, packet filtering, policy application and so on. The SGSN is a service support point of accessing to the EPC network by the user of the GERAN and UTRAN, of which the function is similar to that of the MME, and is responsible for the functions, such as, location update of the user, paging management and bearer management. The PCRF is responsible for providing a policy control and charging rule to the PCEF.

With the development of the mobile Internet, the 3GPP network began to support the devices with special characteristics, such as, a sensor device, a data card, etc.; due to their different characteristics, these different types of devices and users may have different demands and use conditions of the network when using the network. Therefore, considering from the point of view of operating, the operators provides different networks for these devices and users with different characteristics, and these networks may have characteristics different from those for common user access, known as dedicate networks. Considering compatibility issues, some devices may not be able to notify their device types, so the network may only be able to select a dedicate network for the terminal based on the user subscription information. However, the subscription data of the user can only be obtained after the user gets access to the network, so it is required to provide a method of reselecting a dedicate network for the user by a non-dedicate network after the user gets access to the non-dedicate network.

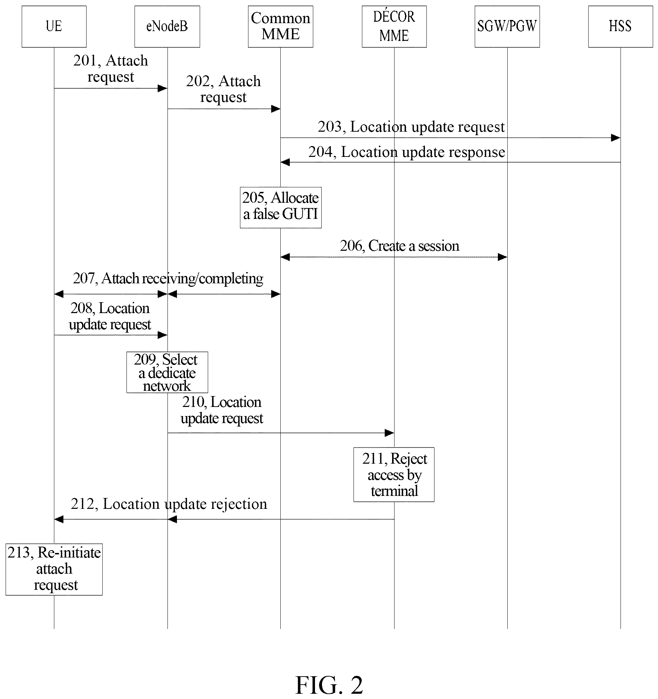

FIG. 2 is a method of reselecting a dedicate network for a user initially accessing to a non-dedicate network in the related art. As shown in FIG. 2, the method mainly includes the following step 201 to step 213.

In steps 201∼202, the terminal initiates an attach request, which carries a real identifier or a temporary identifier of the terminal. The base station may route the request to an MME of a non-dedicate network.

In steps 203∼204, the MME initiates a location update request to the HSS after completing the process of authorization and authentication of the terminal. The HSS inserts a user data which carries the user subscription type information to the MME after receiving the location update request.

In step 205, the MME judges that it is required to reselect a dedicate network for the user based on the subscription data and the local configuration, therefore, for a dummy temporary identifier and a non-broadcast tracking area identifier are allocated for the terminal. Herein, the temporary identifier includes two parts: a Globally Unique MME Identifier (GUMMEI) and an M-Temporary Mobile Station Identifier (temporary terminal identification allocated by the MME, M-TMSI), herein, the GUMMEI is pointed to the dedicate network instead of the MME allocating the identifier.

In step 206, the MME sends a Create session request to the SGW/PGW, the SGW/PGW returns a Create session response to the MME after creating the session successfully.

In step 207, the MME sends the assigned temporary identifier and the non-broadcast tracking area identifier to the terminal through an attachment acceptance message. The terminal sends an attachment completion message to the network after the receiving and completing a wireless bearer creating process.

In step 208, the terminal initiates, inconsistent with the broadcast, a tracking area update request carrying the GUTI according to the received non-broadcast tracking area identifier, herein, the message sent to the base station carries the GUMMEI information in the dummy GUTI.

In steps 209∼210, the base station selects MME of a dedicate network for the terminal according to the GUMMEI information. And the tracking area update request is forwarded to the MME of the dedicate network.

In steps 211∼212, the MME of the dedicate network receives the request, and judges that the user is registered to a non-dedicate network according to the GUTI contained therein, therefore rejects the access, including a rejection reason as an implicit separation therein.

In step 213, the terminal re-initiates the attach request which carries the dummy GUTI to re-implement the attachment process in the related art. The base station can select a dedicate network according to the GUMMEI information therein. In that process, the MME of the dedicate network selects the SGW and the PGW of the dedicate network for the terminal according to the local configuration after the MME in the dedicate network is selected.

However, in the above scheme, it does not consider how to keep on or reselect a dedicate network when the location of the terminal is changed, thus a dedicate network may not be reselected for the terminal after the location of the terminal is changed.

In view of the problem that a dedicate network may not be selected for the terminal after the location of the terminal is changed in the related art, an effective solution is not put forward yet currently.

### Summary of the Invention

In view of the problem that the dedicate network may not be selected after the location of a terminal is changed in the related art, the present invention provides a dedicate network selection method and device, to at least solve the above problem.

A dedicate network selection method is provided according to one embodiment of the present invention, including: a mobility management entity (MME) acquiring user subscription data of a terminal when receiving a location update request; the MME determining to select a dedicate network for the terminal according to the user subscription data; the MME judging whether a serving gateway (SGW) and a packet data network gateway (PGW) currently being used by the terminal belong to the dedicate network; and if the SGW and/or the PGW currently being used does not belong to the dedicate network, then the MME selecting an SGW and/or PGW of the dedicate network for the terminal, and switching the SGW and/or the PGW used by the terminal to the selected SGW and/or PGW.

Alternatively, the MME judging whether a serving gateway (SGW) and a packet data network gateway (PGW) currently being used by the terminal belong to the dedicate network includes: according to address information of SGWs and PGWs of a dedicate network locally configured, the MME judging whether the SGW and the PGW currently being used by the terminal belong to the dedicate network; or, the MME acquiring Fully Qualified Domain Names (FQDNs) of the SGW and the PGW currently being used by the terminal through a context request or a domain name system (DNS), and according to attributes of FQDNs of SGWs and PGWs of a dedicate network, judging whether the SGW and PGW currently being used by the terminal belong to the dedicate network.

Alternatively, the MME selecting the SGW and/or the PGW of the dedicate network for the terminal includes: the MME selecting the SGW and/or the PGW used by the terminal from the SGWs and the PGWs of the dedicate network locally configured; or, the MME querying for the FQDN of the SGW and/or the PGW from the DNS, and selecting an SGW and/or PGW of a dedicate network from a list returned by the DNS according to attributes of the FQDNs of the SGWs and/or the PGWs of the dedicate network.

Alternatively, the MME switching the SGW and/or the PGW used by terminal to the selected SGW and/or PGW includes: if the SGW currently being used does not belong to the dedicate network and the PGW currently being used belongs to the dedicate network, then the MME switching the SGW used by the terminal to the selected SGW; if the SGW currently being used belongs to the dedicate network and the PGW currently being used does not belong to the dedicate network, then the MME switching the PGW used by the terminal to the selected PGW; and if the SGW currently being used does not belong to the dedicate network and the PGW currently being used does not belong to the dedicate network, then the MME switching the SGW used by the terminal to the selected SGW and then switching the PGW used by the terminal to the selected PGW.

Alternatively, the MME switching the SGW used by terminal to the selected SGW includes: the MME sending a Create session request to the selected SGW, to request the selected SGW to create a session for the terminal and send a modify bearer request to the PGW currently being used; and the MME sending a delete session request to the SGW currently being used, to request to delete a session of the terminal on the SGW currently being used.

Alternatively, the MME switching the PGW used by terminal to the selected PGW includes: in step A, the MME judging whether all PGWs connected to the terminal do not belong to the dedicate network; if yes, then executing step B; otherwise, executing step C; in step B, the MME sending a message to the terminal, to indicate the terminal to re-initiate an attach request and send a delete session request through the SGW currently being used to the PGW currently being used, to request to delete a session of the terminal on the PGW currently being used; and in step C, the MME sending the delete session request through the SGW of the dedicate network to the PGW currently being used, to request to delete the session of the terminal on the PGW currently being used and then send a bearer deactivation request to the terminal, to indicate the terminal to delete a related data packet network (PDN) connection and initiate reactivation of the PDN connection, and the MME allocating the selected PGW for the terminal in a process of the reactivation.

A dedicate network selection device located in a mobility management entity is provided according to another embodiment of the present invention, including: an acquiring module, configured to: acquire user subscription data of a terminal when receiving a location update request; a determination module, configured to: determine to select a dedicate network for the terminal according to the user subscription data; a judgment module, configured to: judge whether a serving gateway (SGW) and a packet data network gateway (PGW) currently being used by the terminal belong to the dedicate network; if the SGW and/or the PGW currently being used does not belong to the dedicate network, then trigger an execution module; and the execution module, configured to: select the SGW and/or the PGW of the dedicate network for the terminal, and switch the SGW and/or the PGW used by the terminal to the selected SGW and/or PGW.

Alternatively, the judgment module judges by one of the following modes: according to address information of SGWs and PGWs of a dedicate network locally configured, judging whether the SGW and the PGW currently being used by the terminal belong to the dedicate network; and acquiring Fully Qualified Domain Names (FQDNs) of the SGW and the PGW currently being used by the terminal through a context request or a domain name system (DNS), and according to attributes of FQDNs of SGWs and PGWs of a dedicate network, judging whether the SGW and PGW currently being used by the terminal belong to the dedicate network.

Alternatively, the execution module selects the SGW and/or the PGW of the dedicate network for the terminal by one of the following modes: selecting the SGW and/or the PGW used by the terminal from the SGWs and the PGWs of the dedicate network locally configured; or, querying for the FQDN of the SGW and/or the PGW from the DNS, and selecting an SGW and/or PGW of the dedicate network from a list returned by the DNS according to attributes of the FQDNs of the SGWs and/or the PGWs of the dedicate network.

Alternatively, the execution module includes: a first switching module, configured to: in a case that the SGW currently being used does not belong to the dedicate network and the PGW currently being used belongs to the dedicate network, switch the SGW used by the terminal to the selected SGW; a second switching module, configured to: in a case that the SGW currently being used belongs to the dedicate network and the PGW currently being used does not belong to the dedicate network, switch the PGW used by the terminal to the selected PGW; and a third switching module, configured to: in a case that the SGW currently being used does not belong to the dedicate network and the PGW currently being used does not belong to the dedicate network, switch the SGW used by the terminal to the selected SGW, and then switch the PGW used by the terminal to the selected PGW.

Alternatively, the first switching module includes: a first request unit, configured to: send a Create session request to the selected SGW, to request the selected SGW to create a session for the terminal and send a modify bearer request to the PGW currently being used by the selected SGW; and a second request unit, configured to: send a delete session request to the SGW currently being used, to request to delete a session of the terminal on the SGW currently being used.

Alternatively, the second switching module includes: a first judgment unit, configured to: judge whether all PGWs connected to the terminal do not belong to the dedicate network; if yes, then trigger a first switching unit; otherwise, trigger a second switching unit; the first switching unit, configured to send a message to the terminal, to indicate the terminal to re-initiate an attach request and send a delete session request through the SGW currently being used to the PGW currently being used, to request to delete a session of the terminal on the PGW currently being used; and the second switching unit, configured to send a delete session request through the SGW of the dedicate network to the PGW currently being used, to request to delete the session of the terminal on the PGW currently being used and then send a bearer deactivation request to the terminal, to indicate the terminal to delete a related data packet network (PDN) connection and initiate reactivation of the PDN connection, and allocate the selected PGW for the terminal in a process of the reactivation of the terminal.

A mobility management entity is provided according to another embodiment of the present invention, which includes the above dedicate network selection device.

According to the present invention, the mobility management entity selects the SGW and the PGW of the dedicate network for the terminal when receiving a tracking area update request or a route area update request of the terminal, which solves the problem that a dedicate network may not be selected for the terminal after the location of the terminal is changed, and then can ensure that the terminal keeps on or a dedicate network is reselected after the location is changed, and improves the success rate of accessing by the terminal.

### Brief Description of Drawings

The accompanying drawings described herein are used to provide further understanding for the present invention and constitute a part of the present application. The illustrated embodiments of the present invention and the description thereof are used to explain the present invention, rather than constituting an inappropriate limitation on the present invention. In the accompanying drawings:
FIG. 1 is a schematic diagram of a network architecture of an EPS system;
FIG. 2 is a flow chart of a method of reselecting a dedicate network for a user initially accessing to a non-dedicate network according to the related art;
FIG. 3 is a flow chart of a dedicate network selection method according to an embodiment of the present invention;
FIG. 4 is a flow chart of an MME executing a dedicate network selection method according to an alternative embodiment of the present invention;
FIG. 5 is a structural schematic diagram of a dedicate network selection device according to an embodiment of the present invention;
FIG. 6 is a signaling flow chart according to embodiment one of the present invention;
FIG. 7 is a signaling flow chart according to embodiment two of the present invention;
FIG. 8 is a signaling flow chart according to embodiment three of the present invention.

### Specific Embodiments

The present invention is described in detail with reference to the accompanying drawings and in combination with embodiments hereinafter. It should be illustrated that, in the case of not conflicting, the embodiments in the present application and features in the embodiments can be combined with each other.

A dedicate network selection method is provided according to the embodiment of the present invention.

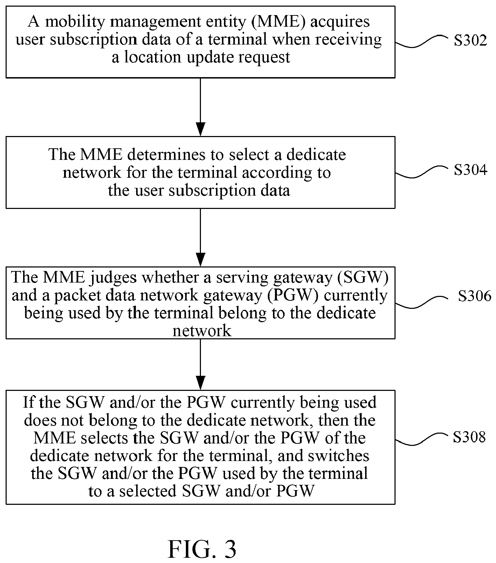

FIG. 3 is a flow chart of a dedicate network selection method according to an embodiment of the present invention. As shown in FIG. 3, the method mainly includes the following step S302 to step S308.

In S302, a mobility management entity (MME) acquires user subscription data of a terminal when receiving a location update request.

In the specific implementation process, when the mobility management entity is an MME, the location update request is a tracking area update (TAU) request; and when the mobility management entity is an SGSN, the location update request is a route area update (RAU) request.

Alternatively, the mobility management entity of the embodiment of the present invention is a mobility management entity of a dedicate network.

For example, the terminal can initiate a TAU process to a target MME by a base station, herein, the terminal can initiate the TAU process in an idle state and also can initiate it after the switching; if the terminal initiates the TAU in the idle state, then the MME can further acquire the context from the source MME when receiving the TAU request, and update the bearer. If the TAU is initiated after the switching, then the context transmission and the bearer update are completed during the switching process.

The MME can acquire user subscription information of the terminal from a location update response returned by the HHE through initiating a location update request to the HSS.

In step S304, the mobility management entity determines to select a dedicate network for the terminal according to the user subscription data and the local configuration.

In order to facilitate the network to select the dedicate network for the terminal, the subscription may indicate that some terminals should be routed to the dedicate network, such as, by means of increasing an attribute tag; when the mobile management entity receives the subscription data of this type of user, it can be routed to the dedicate network according to a specific tag. In particular, there may be different dedicate networks for different attributes, that is, there are various dedicate networks in the network, and the mobility management entity can select for it according to different attributes. Considering the roaming scene, besides according to the subscription data, the selection can also be assisted according to the local configuration of the mobility management entity; for example, attribute of an indication terminal A in the subscription data is 1, which can be routed to the dedicate network 1, but the local configuration of the mobility management entity does not allow the roaming user to use its own dedicate network 1, then it can ignore the subscription setting and select a common network for the terminal.

In step S306, the MME judges whether a serving gateway (SGW) and a packet data network gateway (PGW) currently being used by the terminal belong to the dedicate network.

Alternatively, address information of the SGW and the PGW of the dedicate network can be configured in the MME, and the MME judges whether the SGW and the PGW currently being used by the terminal belong to the dedicate network according to address information of SGWs and PGWs of a dedicate network locally configured; or, the MME can also acquire Fully Qualified Domain Names (FQDNs) of the SGW and the PGW currently being used by the terminal through a context request or a domain name system (DNS), and judge whether the SGW and PGW currently being used by the terminal belong to the dedicate network according to attributes of FQDNs of SGWs and PGWs of a dedicate network.

In step S308, if the SGW and/or the PGW currently being used does not belong to the dedicate network, then the MME selects the SGW and/or the PGW of the dedicate network for the terminal, and switches the SGW and/or the PGW used by the terminal to the selected SGW and/or PGW.

Alternatively, the MME can select the SGW and/or the PGW used by the terminal from the SGWs and the PGWs of the dedicate network locally configured when selecting the SGW and the PGW of the dedicate network for the terminal; or, query for the FQDN of the SGW and/or the PGW from the DNS, and select an SGW and/or PGW of a dedicate network from a list returned by the DNS according to the attributes of the FQDNs of the SGWs and/or the PGWs of the dedicate network.

In an alternative implementation mode of the embodiment of the present invention, the MME switching the SGW and/or the PGW used by terminal to the selected SGW and/or PGW can includes: if the SGW currently being used does not belong to the dedicate network and the PGW currently being used belongs to the dedicate network, then the MME switching the SGW used by the terminal to the selected SGW; if the SGW currently being used belongs to the dedicate network and the PGW currently being used does not belong to the dedicate network, then the MME switching the PGW used by the terminal to the selected PGW; and if the SGW currently being used does not belong to the dedicate network and the PGW currently being used does not belong to the dedicate network, then the MME switching the SGW used by the terminal to the selected SGW and then switching the PGW used by the terminal to the selected PGW.

In an alternative implementation mode of the embodiment of the present invention, the MME can send a Create session request to the selected SGW when the SGW used by the terminal is switched, to request the selected SGW to create a session for the terminal and send a modify bearer request to the PGW currently being used; and the MME sends a delete session request to the SGW currently being used, to request to delete a session of the terminal on the SGW currently being used. Thus the SGW used by the terminal is switched to the SGW of the dedicate network.

In an alternative implementation mode of the embodiment of the present invention, the MME switching the PGW used by terminal to the selected PGW can include the following steps: in step A, the MME judges whether all PGWs connected to the terminal do not belong to the dedicate network; if yes, then step B is executed; otherwise, step C is executed; in step B, the MME sends a message to the terminal, to indicate the terminal to re-initiate an attach request and send a delete session request through the SGW currently being used to the PGW currently being used, to request to delete a session of the terminal on the PGW currently being used; and in step C, the MME sends the delete session request through the SGW of the dedicate network to the PGW currently being used, to request to delete the session of the terminal on the PGW currently being used and then send a bearer deactivation request to the terminal, to indicate the terminal to delete a related data packet network (PDN) connection and initiate reactivation of the PDN connection, and the MME allocates the selected PGW for the terminal in a process of the reactivation.

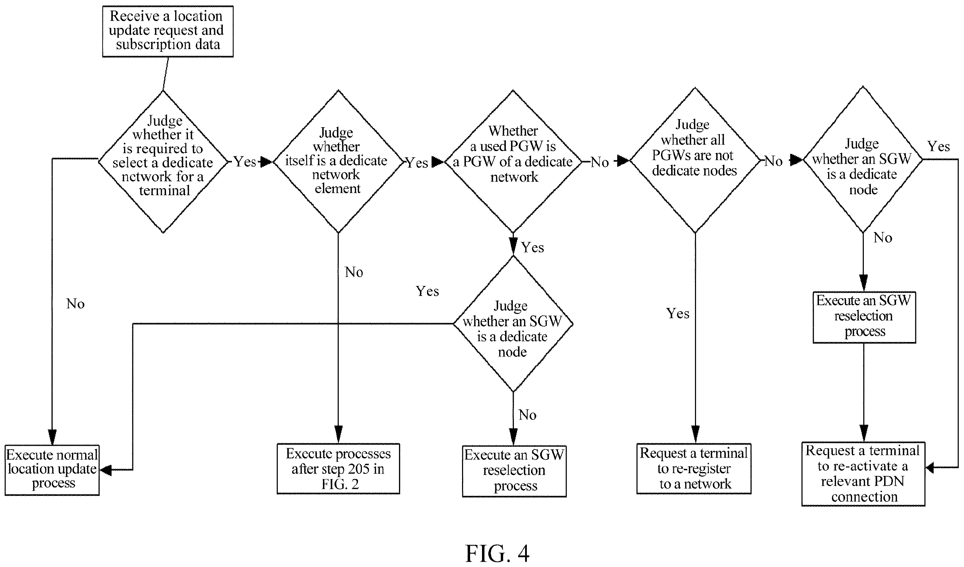

Alternatively, the MME can be all MMEs in the network, and FIG. 4 is a flow chart of implementation of the MME in the alternative implementation of the embodiment of the present invention. As shown in FIG. 4, the MME first judges whether it is required to select a dedicate network for the terminal after receiving the location update request and the subscription data of the terminal; if it is not required, then a normal location update process is executed; if it is required, the MME further judges whether the MME itself is a network element of the dedicate network. If the MME is not a network element of the dedicate network, then it is executed according to the processes as shown in FIG. 2, that is, the process after step 205 is executed; if the MME is the network element of the dedicate network, then the MME judges whether the PGW currently being used by the terminal is the PGW of the dedicate network. If the PGW currently being used is the PGW of the dedicate network, then the MME further judges whether the SGW currently being used by the terminal belongs to the dedicate network; if the SGW currently being used by the terminal does not belong to the dedicate network, then the SGW reselection process is executed; otherwise, the normal location update process is executed. If the PGW currently being used is not the PGW of the dedicate network, then the MME further determines that all PGWs connected to the terminal do not belong to the dedicate network, that is, all are not the nodes of the dedicate network. If all PGWs connected to the terminal do not belong to the dedicate network, then a cancellation process is initiated, or the location update request is rejected, to request the terminal to re-register to the network. If part of the PGWs connected to the terminal belong to the dedicate network, then it is further judged whether the SGW currently being used by the terminal belongs to the dedicate network; if the SGW currently being used by the terminal does not belong to the dedicate network, then the SGW reselection process is executed, and a bearer deactivation is initiated to a related PDN connection where the PGW does not belong to the dedicate network, to request the terminal to re-activate the related PDN connection; if the SGW currently being used by the terminal belongs to the dedicate network, then the bearer deactivation is directly initiated to the related PDN connection where the PGW does not belong to the dedicate network, to request the terminal to re-activate the related PDN connection.

In the embodiment of the present invention, the MME of the dedicate network judges whether to select a specialized SGW/PGW for the terminal according to the user subscription data; if the PGW currently being used by the terminal is not the PGW of the dedicate network, then it is further judged whether all PGWs are not the PGWs of the dedicate network. If all are not, then a cancellation process is initiated, or the location update request is rejected, to request the terminal to re-register to the network. If not all are non-dedicate nodes, then it is further judged whether the SGW is a dedicate node; if the SGW is not a dedicate node, then the SGW reselection process is first executed, and the bearer deactivation is initiated, to request the terminal to re-activate the related PDN connection. If the SGW currently being used by the terminal is not the SGW of the dedicate network, then the MME executes the SGW reselection process. Through the technical scheme provided by the embodiment of the present invention, the terminal can keep on or a dedicate network is reselected after the location of the terminal is changed.

According to the embodiment of the present invention, a dedicate network selection device is further provided, which is located in the mobility management entity and is used for implementing the above dedicate network selection method provided by the embodiment of the present invention.

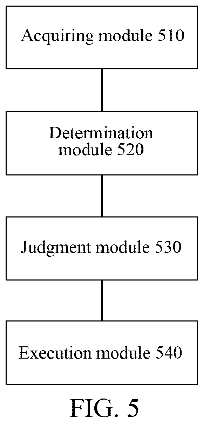

FIG. 5 is a structural schematic diagram of a dedicate network selection device according to an embodiment of the present invention; as shown in FIG. 5, the device mainly includes: an acquiring module 510, configured to: acquire user subscription data of a terminal; a determination module 520, configured to: determine to select a dedicate network for the terminal according to the user subscription data and local configuration; a judgment module 530, configured to: judge whether a serving gateway (SGW) and a packet data network gateway (PGW) currently being used by the terminal belong to a dedicate network; if the SGW and/or the PGW currently being used do not belong to the dedicate network, then trigger an execution module; and the execution module 540, configured to: select the SGW and/or the PGW of the dedicate network for the terminal, and switch the SGW and/or the PGW used by the terminal to the selected SGW and/or PGW.

Alternatively, the judgment module 530 judges by one of the following modes: according to address information of SGWs and PGWs of a dedicate network locally configured, judging whether the SGW and the PGW currently being used by the terminal belong to the dedicate network; and acquiring Fully Qualified Domain Names (FQDNs) of the SGW and the PGW currently being used by the terminal through a context request or a domain name system (DNS), and according to attributes of FQDNs of SGWs and PGWs of a dedicate network, judging whether the SGW and PGW currently being used by the terminal belong to the dedicate network.

Alternatively, the execution module 540 can select the SGW and/or the PGW of the dedicate network for the terminal by one of the following modes: selecting the SGW and/or the PGW used by the terminal from the SGWs and the PGWs of the dedicate network locally configured; or, query for the FQDN of the SGW and/or the PGW from the DNS, and select an SGW and/or the PGW of a dedicate network from a list returned by the DNS according to attributes of the FQDNs of the SGWs and/or the PGWs of the dedicate network.

Alternatively, the execution module 540 can include: a first switching module, configured to: in a case that the SGW currently being used does not belong to the dedicate network and the PGW currently being used belongs to the dedicate network, switch the SGW used by the terminal to the selected SGW; a second switching module, configured to: in a case that the SGW currently being used belongs to the dedicate network and the PGW currently being used does not belong to the dedicate network, switch the PGW used by the terminal to the selected PGW; and a third switching module, configured to: in a case that the SGW currently being used does not belong to the dedicate network and the PGW currently being used does not belong to the dedicate network, switch the SGW used by the terminal to the selected SGW, and then switch the PGW used by the terminal to the selected PGW.

Alternatively, the first switching module can include: a first request unit, configured to: send a Create session request to the selected SGW, to request the selected SGW to create a session for the terminal and send a modify bearer request to the PGW currently being used by the selected SGW; and a second request unit, configured to: send a delete session request to the SGW currently being used, to request to delete a session of the terminal on the SGW currently being used.

Alternatively, the second switching module can include: a first judgment unit, configured to: judge whether all PGWs connected to the terminal do not belong to the dedicate network; if yes, then trigger a first switching unit; otherwise, trigger a second switching unit; the first switching unit, configured to send a message to the terminal, to indicate the terminal to re-initiate an attach request and send a delete session request through the SGW currently being used to the PGW currently being used, to request to delete a session of the terminal on the PGW currently being used; and the second switching unit, configured to send a delete session request through the SGW of the dedicate network to the PGW currently being used, to request to delete the session of the terminal on the PGW currently being used and then send a deactivation bearer request to the terminal, to indicate the terminal to delete a related data packet network (PDN) connection and initiate reactivation of the PDN connection, and allocate the selected PGW for the terminal in a process of the reactivation of the terminal.

A mobility management entity is further provided according to an embodiment of the present invention, which includes the above dedicate network selection device.

The technical scheme provided by the embodiment of the present invention is explained through a specific embodiment hereinafter.

### Embodiment one

In the present embodiment, the implementation of selecting the dedicate network in the TAU /RAU process is described.

In the present embodiment, the source network does not support the dedicate network, the MME/SGSN in the target network is the network element in the dedicate network, and the SGW is not in the network element of the dedicate network. In the present embodiment, the terminal may initiate the TAU/RAU process in an idle state, and also can initiate the TAU/RAU process after the switching (HO). The following description takes the TAU as an example, and for the RAU, it is similar.

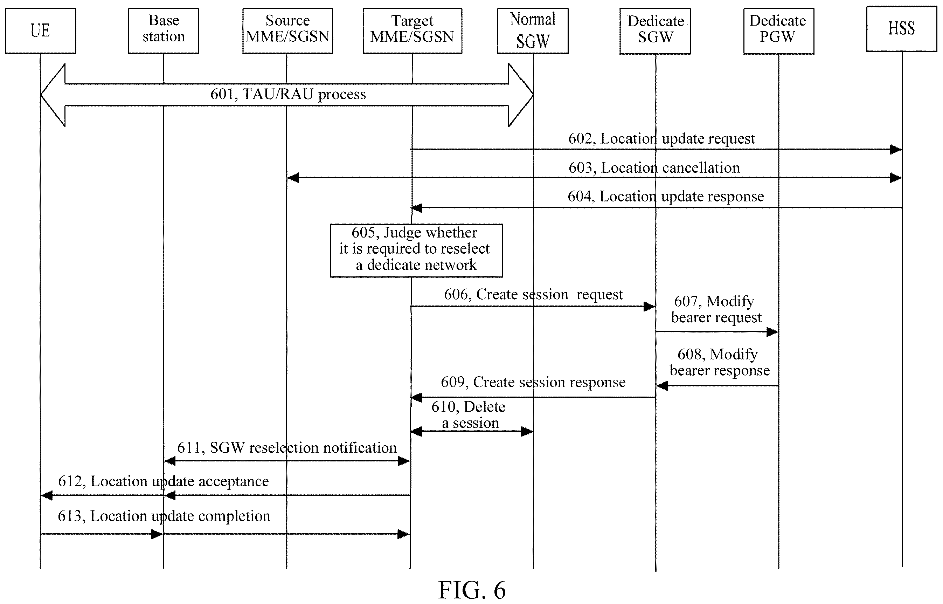

In the present embodiment, FIG. 6 is a signaling flow chart of executing the dedicate network selection in the TAU process; as shown in FIG. 6, mainly including the following steps:
in step 601, the UE initiates the TAU process to a target MME through the base station. If the process is initiated in an idle state, then before executing the step 602, the target MME is required to obtain the context from the source MME and update the bearer. If the TAU is initiated after the switching, then the context transmission and the bearer update are completed during the switching process, and the step 602 can be executed directly.

In steps 602∼604, the target MME initiates a location update request to the HSS. After the HSS received the request, the HSS sends a location cancellation request to the source MME/SGSN, and the source MME/SGSN returns a location cancellation response to the HSS. The HSS inserts the user data which carries the user subscription type information to the target MME through a location update response.

In step 605, the target MME judges that it is required to reselect a dedicate network for the user based on the subscription data and the local configuration, and the target MME itself is a dedicate network node. The target MME judges that the PGW connected to the terminal is the dedicate network node and the SGW is not the dedicate network node according to the local configuration. The situation that the PGW is not the dedicate network node is discussed in embodiment two or three.

If the MME is not the dedicate network node, then the MME does not need to execute the following steps, while directly executes the relevant processes after the step 205 in the related art.

The target MME acquires address information of the SGW of the dedicate network according to the local configuration information and/or domain name system (DNS) query.

The mode of the MME selecting or configuring a dedicate SGW/PGW can be:
1. Address information of the SGWs and the PGWs of the dedicate network is configured for all dedicate MMEs. Therefore the MME can judge whether the SGW/PGW is a dedicate node according to the local configuration, or select a dedicate SGW/PGW.
2. The SGW/PGW uses different Fully Qualified Domain Names (FQDNs), such as, special markers and other modes; the MME acquires a corresponding FQDN through the context request or the DNS query, and is able to judge whether the SGW/PGW is the dedicate node, or a dedicate SGW/PGW is selected from a list returned from the DNS.

In step 606- step 609, the target MME sends a Create session request to the SGW, and the SGW sends a modify bearer request to the PGW. After the bearer is updated successfully, the PGW sends a bearer modification response to the SGW, and the SGW returns a Create session response to the MME.

In step 610, the target MME sends a delete session request to the SGW of the non-dedicate node, to delete the corresponding resource, and the SGW sends a session deletion response to the MME after the deletion is successful.

In step 611, if the TAU is initiated after the switching, or a wireless bearer is created after the TAU, then it is required to notify the eNB after the reselection, that is, the step is executed. The target MME sends the address and the tunnel end identifier allocated for the reselected dedicate SGW to the eNB.

In the previous process, if there is no wireless bearer created, then it is not required to execute that step.

In steps 612∼613, the target MME to sends a TAU acceptance message to the terminal, and the terminal stores the temporary identifier allocated by the network and other relevant information after receiving the TAU acceptance message, and sends a TAU completion message to the MME.

### Embodiment two

In the present embodiment, the source network does not support the dedicate network, the MME/SGSN in the target network is a network element in the dedicate network, and the PGW is not a network element of the dedicate network. When the terminal has multiple PGWs, and one or more (not all) are not the dedicate network nodes. That process may be a TAU/RAU process which is initiated in an idle state, and may also be a TAU/RAU process which is initiated after the switching (HO). The present embodiment takes the TAU as an example, and for the RAU, it is similar.

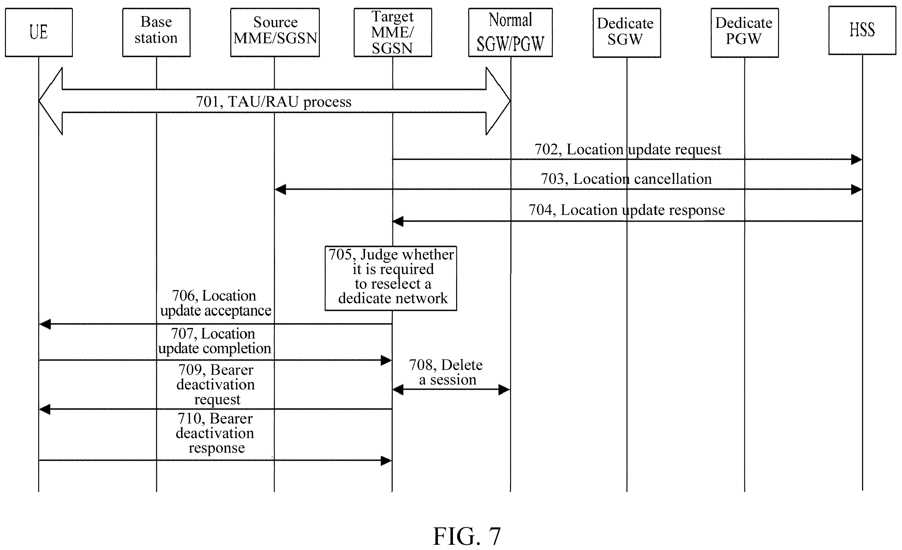

In the present embodiment, FIG. 7 is a signaling flow chart of the dedicate network selection; as shown in FIG. 7, mainly including the following steps:
in step 701, the UE initiates the TAU process to a target MME through the base station. If the process is initiated in an idle state, then the target MME is required to acquire the context from the source MME and update the bearer before executing the step 702. If the TAU is initiated after the switching, then the context transmission and the bearer update are completed during the switching process, and the step 702 can be executed directly.

In steps 702∼704, the target MME initiates a location update request to the HSS. After receiving the request, the HSS sends a location cancellation request to the source MME/SGSN, and the source MME/SGSN returns a location cancellation response to the HSS. The HSS inserts the user data which carries the user subscription type information to the MME through a location update response.

In step 705, the target MME judges that it is required to reselect a dedicate network for the user according to the subscription data and the local configuration, and the target MME itself is a dedicate network node. The target MME judges that the SGW connected to the terminal is the dedicate network node and the PGW is not the dedicate network node according to the local configuration. For the situation that both the SGW and the PGW are not the dedicate network nodes, it is required to first execute the steps 606∼613 in the embodiment in FIG. 6, and after the execution, the SGW is the dedicate network node, and the relevant steps in the embodiment are then executed.

If the MME is not the dedicate network node, then the MME does not need to execute the following steps, while directly executes the relevant processes after the step 205 in the related art.

The target MME acquires address information of the PGW of the dedicate network according to the local configuration information and/or domain name system (DNS) query.

The mode of the MME selecting or configuring a dedicate SGW/PGW can be:
1. Address information of the SGWs and the PGWs of the dedicate network is configured for all dedicate MME. Therefore the MME can judge whether the SGW/PGW is a dedicate node according to the local configuration, or select a dedicate SGW/PGW.
2. The SGW/PGW uses different Fully Qualified Domain Names (FQDNs), such as, special markers and other modes; the MME acquires a corresponding FQDN through the context request or the DNS query, and is able to judge whether the SGW/PGW is the dedicate node, or a dedicate SGW/PGW is selected from a list returned from the DNS.

In steps 706∼707, the target MME to sends a TAU acceptance message to the terminal, and the terminal stores the temporary identifier allocated by the network and other relevant information after receiving the TAU acceptance message, and sends a TAU completion message to the MME.

If the process is a TAU initiated after the HO, or there is already a wireless bearer created, then the target MME initiates the steps 708∼710 after the UE enters the idle state. If there is no wireless bearer created in the previous process, then the steps 708∼710 can immediately be executed.

In step 708, the target MME send a delete session request through the SGW to the PGW. The PGW returns the session deletion response to the MME through the SGW after deleting the session.

In steps 709∼710, the target MME initiates a bearer deactivation request to the terminal, which carries a default bearer identifier of the relevant PDN connection, and carries the deactivation cause as the "reactivation". The terminal deletes the relevant PDN connection and returns the bearer deactivation response to the MME, and the reactivation of the PDN connection is initiated in the subsequent. In the process of the reactivation, the target MME selects the PGW of the dedicate network for the terminal, and the selection scheme is as described in step 705.

### Embodiment three

### In the present embodiment,

In the present embodiment, the source network does not support the dedicate network, the MME/SGSN in the target network is a network element in the dedicate network, and the PGW is not a network element of the dedicate network. In that embodiment, it is assumed that all PGWs connected to the terminal are not the dedicate network nodes. Or the MME supports the dedicate network selection but the MME itself is not a dedicate network node; at this time, it is recommended to execute steps 506a~510a.

That process may be a TAU/RAU process which is initiated in an idle state, and may also be a TAU/RAU process which is initiated after the switching (HO). The following description takes the TAU as an example, and for the RAU, it is similar.

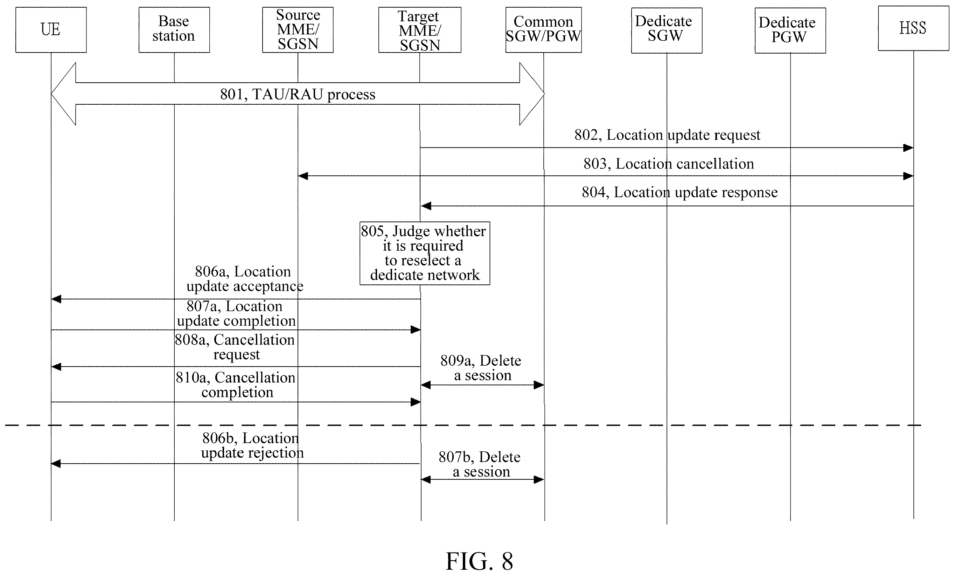

In the present embodiment, FIG. 8 is a signaling flow chart of the dedicate network selection; as shown in FIG. 8, mainly including the following steps:
Steps 801~805 are similar with steps 701~705, which will not be repeated.

For steps 806a~810a and steps 806b~807b, only one kind of them is required to be executed.

Similar to FIG. 7, if the process is a TAU initiated after the HO, or there is already a wireless bearer has been created, then the target MME initiates the steps 806a~810a or steps 806b~807b after the UE enters the idle state. If there is no wireless bearer created in the previous process, then the steps 806a~810a or steps 806b~807b can immediately be executed.

In steps 806a~807a, the target MME sends a TAU acceptance message to the terminal, and the terminal stores the temporary identifier allocated by the network and other relevant information after receiving the TAU acceptance message, and sends a TAU completion message to the MME.

In step 808a, the target MME sends a cancellation request to the terminal, which carries an indication to request the terminal to re-initiate the attach process.

In step 809a, the target MME sends a delete session request through the SGW to the PGW. The PGW returns the session deletion response to the MME through the SGW after deleting the session.

In step 810a, the terminal returns a cancellation completion message to the target MME, and re-initiate the attach request, which carries the temporary identifier allocated by the network in step 806a. The base station can select the target MME according to the GUMMEI information therein.

In step 806b, the target MME returns a TAU rejection message to the terminal, which carries the rejection reason as implicit separation. The terminal re-initiates the attach request after receiving the message.

In step 807b, the target MME send a delete session request through the SGW to the PGW. The PGW returns the session deletion response to the MME through the SGW after deleting the session.

From the above descriptions, it can be seen that the present invention realizes the technical effects as follows: the mobility management entity selects the SGW and the PGW of the dedicate network for the terminal when receiving a tracking area update request or a route area update request of the terminal, which solves the problem that a dedicate network may not be selected for the terminal after the terminal's location is changed, and then can ensure that the terminal keeps on or a dedicate network is reselected after the location is changed, and improves the success rate of accessing by the terminal.

Obviously, it can be understood by those skilled in the art that each module or each step above-mentioned in the present invention can be implemented by the universal calculating device, and they can be integrated in a single calculating device, or distributed in the network consisted of a plurality of calculating devices. Alternatively, they can be implemented by the executable program codes of the calculating device. Accordingly, they can be stored in the storage device and implemented by the calculating device, and in some situation, the shown or described steps can be executed according to a sequence different from here, or they are made into each integrated circuit module respectively, or a plurality of modules or steps therein are made into the single integrated circuit module to be implemented. In this way, the present invention is not limit to any specific form of the combination of the hardware and software.

The above description is only the preferred embodiments of the present invention and is not intended to limit the present invention. For those skilled in the art, the present invention can have various modifications and variations. All of modifications, equivalents and/or variations within the rule and essence of the present invention should be embodied in the scope of the appended claims of the present invention.

### Industrial Applicability

Based on the above technical scheme provided by the embodiment of the present invention, the mobility management entity selects the SGW and the PGW of the dedicate network for the terminal when receiving the tracking area update request or a route area update request of the terminal, which solves the problem that a dedicate network may not be selected for the terminal after the location of the terminal is changed in the related art, and then can ensure that the terminal keeps on or a dedicate network is reselected after the location of the terminal is changed, and improves the success rate of accessing by the terminal.

## Claims

1. A dedicate network selection method, comprising:
a mobility management entity MME acquiring user subscription data of a terminal when receiving a location update request;
the MME determining to select a dedicate network for the terminal according to the user subscription data;
the MME judging whether a serving gateway SGW and a packet data network gateway PGW currently being used by the terminal belong to the dedicate network; and
if the SGW and/or the PGW currently being used does not belong to the dedicate network, then the MME selecting an SGW and/or PGW of the dedicate network for the terminal, and switching the SGW and/or the PGW used by the terminal to the selected SGW and/or PGW.

2. The method according to claim 1, wherein, the MME judging whether a serving gateway SGW and a packet data network gateway PGW currently being used by the terminal belong to the dedicate network comprises:
according to address information of SGWs and PGWs of a dedicate network locally configured, the MME judging whether the SGW and the PGW currently being used by the terminal belong to the dedicate network; or,
the MME acquiring Fully Qualified Domain Names FQDNs of the SGW and the PGW currently being used by the terminal through a context request or a domain name system DNS, and according to attributes of FQDNs of SGWs and PGWs of a dedicate network, judging whether the SGW and PGW currently being used by the terminal belong to the dedicate network.

3. The method according to claim 1, wherein, the MME selecting the SGW and/or the PGW of the dedicate network for the terminal comprises:
the MME selecting the SGW and/or the PGW used by the terminal from the SGWs and the PGWs of the dedicate network locally configured; or,
the MME querying for the FQDN of the SGW and/or the PGW from the DNS, and selecting an SGW and/or PGW of a dedicate network from a list returned by the DNS according to attributes of the FQDNs of the SGWs and/or the PGWs of the dedicate network.

4. The method according to any one of claims 1 to 3, wherein, the MME switching the SGW and/or the PGW used by terminal to the selected SGW and/or PGW comprises:
if the SGW currently being used does not belong to the dedicate network and the PGW currently being used belongs to the dedicate network, then the MME switching the SGW used by the terminal to the selected SGW;
if the SGW currently being used belongs to the dedicate network and the PGW currently being used does not belong to the dedicate network, then the MME switching the PGW used by the terminal to the selected PGW; and
if the SGW currently being used does not belong to the dedicate network and the PGW currently being used does not belong to the dedicate network, then the MME switching the SGW used by the terminal to the selected SGW and then switching the PGW used by the terminal to the selected PGW.

5. The method according to claim 4, wherein, the MME switching the SGW used by the terminal to the selected SGW comprises:
the MME sending a Create session request to the selected SGW, to request the selected SGW to create a session for the terminal and send a modify bearer request to the PGW currently being used; and
the MME sending a delete session request to the SGW currently being used, to request to delete a session of the terminal on the SGW currently being used.

6. The method according to claim 4, wherein, the MME switching the PGW used by the terminal to the selected PGW comprises:
in step A, the MME judging whether all PGWs connected to the terminal do not belong to the dedicate network; if yes, then executing step B; otherwise, executing step C;
in step B, the MME sending a message to the terminal, to indicate the terminal to re-initiate an attach request and send a delete session request through the SGW currently being used to the PGW currently being used, to request to delete a session of the terminal on the PGW currently being used; and
in step C, the MME sending the delete session request through the SGW of the dedicate network to the PGW currently being used, to request to delete the session of the terminal on the PGW currently being used and then send a bearer deactivation request to the terminal, to indicate the terminal to delete a related data packet network PDN connection and initiate reactivation of the PDN connection, and the MME allocating the selected PGW for the terminal in a process of the reactivation.

7. A dedicate network selection device, located in a mobility management entity MME, comprising:
an acquiring module, configured to: acquire user subscription data of a terminal when receiving a location update request;
a determination module, configured to: determine to select a dedicate network for the terminal according to the user subscription data;
a judgment module, configured to: judge whether a serving gateway SGW and a packet data network gateway PGW currently being used by the terminal belong to the dedicate network; if the SGW and/or the PGW currently being used does not belong to the dedicate network, then trigger an execution module; and
the execution module, configured to: select the SGW and/or the PGW of the dedicate network for the terminal, and switch the SGW and/or the PGW used by the terminal to the selected SGW and/or PGW.

8. The device according to claim 7, wherein, the judgment module judges by one of the following modes:
according to address information of SGWs and PGWs of a dedicate network locally configured, judging whether the SGW and the PGW currently being used by the terminal belong to the dedicate network;
acquiring Fully Qualified Domain Names FQDNs of the SGW and the PGW currently being used by the terminal through a context request or a domain name system DNS, and according to attributes of FQDNs of SGWs and PGWs of a dedicate network, judging whether the SGW and PGW currently being used by the terminal belong to the dedicate network.

9. The device according to claim 7, wherein, the execution module selects the SGW and/or the PGW of the dedicate network for the terminal by one of the following modes:
selecting the SGW and/or the PGW used by the terminal from the SGWs and the PGWs of the dedicate network locally configured; or,
querying for the FQDN of the SGW and/or the PGW from the DNS, and selecting an SGW and/or PGW of a dedicate network from a list returned by the DNS according to attributes of the FQDNs of the SGWs and/or the PGWs of the dedicate network.

10. The device according to any one of claims 7 to 9, wherein, the execution module comprises:
a first switching module, configured to: in a case that the SGW currently being used does not belong to the dedicate network and the PGW currently being used belongs to the dedicate network, switch the SGW used by the terminal to the selected SGW;
a second switching module, configured to: in a case that the SGW currently being used belongs to the dedicate network and the PGW currently being used does not belong to the dedicate network, switch the PGW used by the terminal to the selected PGW;
a third switching module, configured to: in a case that the SGW currently being used does not belong to the dedicate network and the PGW currently being used does not belong to the dedicate network, switch the SGW used by the terminal to the selected SGW, and then switch the PGW used by the terminal to the selected PGW.

11. The device according to claim 10, wherein, the first switching module comprises:
a first request unit, configured to: send a Create session request to the selected SGW, to request the selected SGW to create a session for the terminal and send a modify bearer request to the PGW currently being used; and
a second request unit, configured to: send a delete session request to the SGW currently being used, to request to delete a session of the terminal on the SGW currently being used.

12. The device according to claim 10, wherein, the second switching module comprises:
a first judgment unit, configured to: judge whether all PGWs connected to the terminal do not belong to the dedicate network; if yes, then trigger a first switching unit; otherwise, trigger a second switching unit;
the first switching unit, configured to send a message to the terminal, to indicate the terminal to re-initiate an attach request and send a delete session request through the SGW currently being used to the PGW currently being used, to request to delete the session of the terminal on the PGW currently being used;
the second switching unit, configured to send a delete session request through the SGW of the dedicate network to the PGW currently being used, to request to delete the session of the terminal on the PGW currently being used and then send a bearer deactivation request to the terminal, to indicate the terminal to delete a related data packet network PDN connection and initiate reactivation of the PDN connection, and allocate the selected PGW for the terminal in a process of the reactivation of the terminal.

13. A mobility management entity, comprising the device according to any one of claims 7 to 12.
